# EUROPEAN PATENT APPLICATION

(11) **EP 2 484 978 A2**
(43) Date of publication of application: **08.08.2012**
(21) Application number: 12153160.2
(22) Date of filing: 30.01.2012
(51) Int. Cl.: F23R 3/00, F01D 9/02

(54) **Method and apparatus for cooling combustor liner in combustor**

(30) Priority: 03.02.2011 US 201113020115
(71) Applicant: General Electric Company, Schenectady, NY 12345 (US)
(72) Inventor: Chilar, David William, Greenville, SC South Carolina 29615 (US); Melton, Patrick Benedict, Greenville, SC South Carolina 29615 (US)
(74) Representative: Cleary, Fidelma

(57) **Abstract**

A method and apparatus for cooling a combustor liner (40) in a combustor (14) are disclosed. In one embodiment, a combustor (14) is disclosed. The combustor (14) includes a transition piece (56), and an impingement sleeve (50) at least partially surrounding the transition piece (56) and at least partially defining a generally annular flow path (44, 58) therebetween. The combustor (14) further includes an injection sleeve (100) mounted to one of the transition piece (56) or the impingement sleeve (50) and positioned radially outward of the impingement sleeve (50), the injection sleeve (100) at least partially defining a flow channel (104) configured to flow working fluid (24) to the flow path (44, 58). In another embodiment, a method for cooling a combustor liner (40) in a combustor (14) is disclosed. The method includes flowing a working fluid (24) through a flow channel (104) at least partially defined by an injection sleeve (100), and exhausting the working fluid (24) from the flow channel (104) into a flow path (44, 58) adjacent the combustor liner (40).

## Description

### FIELD OF THE INVENTION

The subject matter disclosed herein relates generally to turbine systems, and more particularly to methods and apparatus for cooling combustor liners in combustors.

### BACKGROUND OF THE INVENTION

Turbine systems are widely utilized in fields such as power generation. For example, a conventional gas turbine system includes a compressor, a combustor, and a turbine. During operation of the turbine system, various components in the system may be subjected to high temperature flows, which can cause the components to fail. Since higher temperature flows generally result in increased performance, efficiency, and power output of the gas turbine system, the components that are subjected to high temperature flows must be cooled to allow the gas turbine system to operate at increased temperatures.

One such component that requires cooling during operation is the combustor liner. Combustion generally takes place within the combustor liner, thus subjecting the combustor liner to high temperature flows. In particular, the downstream end of the combustor liner may be a life-limiting location for the combustor.

A typical combustor utilizes a flow sleeve surrounding the combustor liner, as well as an impingement sleeve surrounding a transition piece downstream of the combustor liner, to create a flow path. Cooling air or other working fluids are flowed upstream through the flow path to cool the combustor liner. Further, additional cooling air or working fluid is flowed into the flow path through, for example, impingement holes defined in the impingement sleeve and the flow sleeve. This additional cooling air or working fluid is further intended to cool the combustor liner. However, typical arrangements of these holes result in significant pressure losses and uneven cooling of the combustor liner.

Additional prior art solutions have utilized injection sleeves mounted to the flow sleeves to cool the combustor liner. These sleeves provide an additional generally upstream flow of cooling air or working fluid to the flow path. However, these sleeves do not adequately cool the downstream end of the combustor liner. Additionally, these sleeves occupy areas of the flow sleeve that could be utilized for, for example, late lean injection of fuel to the combustor system.

Thus, an improved apparatus and method for cooling a combustor liner in a combustor would be desired in the art. For example, an apparatus and method that cool the combustor liner while minimizing resulting pressure losses would be advantageous. Further, an apparatus and method that provide relatively even cooling to the downstream end of the combustor liner would be desired.

### BRIEF DESCRIPTION OF THE INVENTION

Aspects and advantages of the invention will be set forth in part in the following description, or may be obvious from the description, or may be learned through practice of the invention.

The invention resides in a sleeve assembly for a combustor, the combustor including a transition piece and an impingement sleeve at least partially surrounding the transition piece and at least partially defining a generally annular flow path therebetween. The sleeve assembly includes an inner sleeve configured for mounting to the transition piece, and an intermediate sleeve at least partially surrounding the inner sleeve and configured to partially define the flow path therebetween, the intermediate sleeve configured for mounting to the impingement sleeve. The sleeve assembly further includes an injection sleeve mounted to one of the inner sleeve or the intermediate sleeve, the injection sleeve at least partially defining a flow channel configured to flow working fluid therethrough.

In another aspect, the invention resides in a combustor including a transition piece, and an impingement sleeve at least partially surrounding the transition piece and at least partially defining a generally annular flow path therebetween. The combustor further includes an injection sleeve mounted to one of the transition piece or the impingement sleeve and positioned radially outward of the impingement sleeve, the injection sleeve at least partially defining a flow channel configured to flow working fluid to the flow path.

In yet another aspect, the invention resides in a method for cooling a combustor liner in a combustor including flowing a working fluid through a flow channel at least partially defined by an injection sleeve. The injection sleeve is mounted to one of a transition piece or an impingement sleeve and positioned radially outward of the impingement sleeve, the impingement sleeve at least partially surrounding the transition piece and at least partially defining a generally annular flow path therebetween. The method further includes exhausting the working fluid from the flow channel into the flow path adjacent the combustor liner.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

Embodiments of the present invention will now be described, by way of example only, with reference to the accompanying drawings in which:
FIG. 1 is a schematic illustration of a gas turbine system;
FIG. 2 is a side cutaway view of various components of a gas turbine system according to one embodiment of the present disclosure;
FIG. 3 is a perspective view of a portion of a combustor including a transition piece, an impingement sleeve, and an injection sleeve according to one embodiment of the present disclosure;
FIG. 4 is a perspective view of a sleeve assembly according to one embodiment of the present disclosure;
FIG. 5 is a cross-sectional view of a sleeve assembly, along the lines 5--5 as shown in

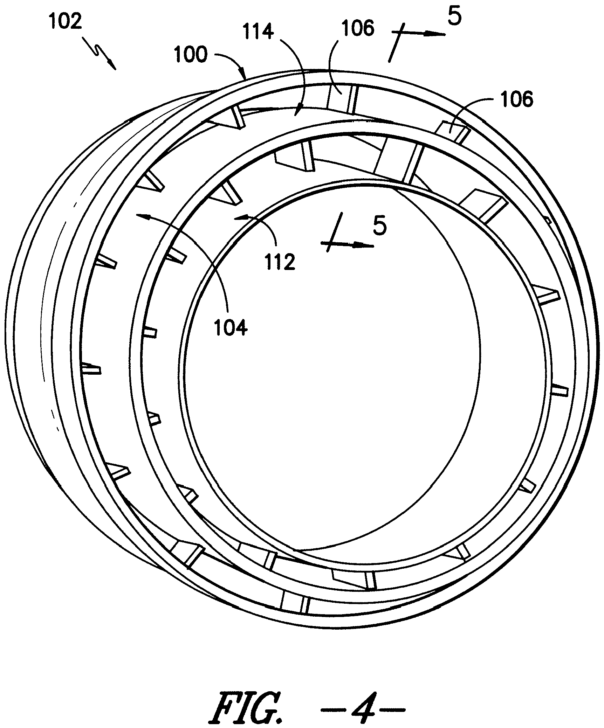

FIG. 4, according to one embodiment of the present disclosure; and

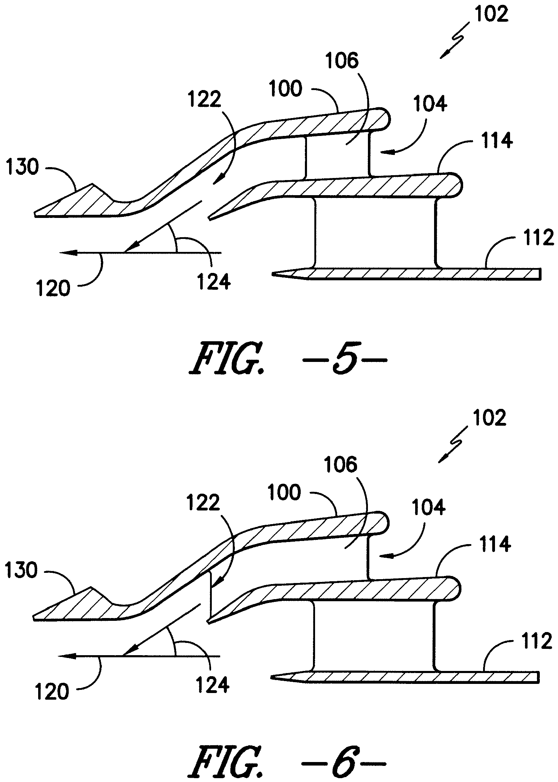

FIG. 6 is a cross-sectional view of a sleeve assembly according to another embodiment of the present disclosure.

### DETAILED DESCRIPTION OF THE INVENTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

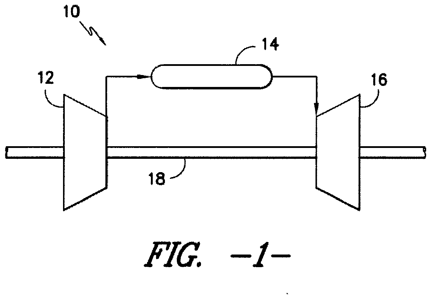

FIG. 1 is a schematic diagram of a gas turbine system 10. The system 10 may include a compressor 12, a combustor 14, and a turbine 16. Further, the system 10 may include a plurality of compressors 12, combustors 14, and turbines 16. The compressors 12 and turbines 16 may be coupled by a shaft 18. The shaft 18 may be a single shaft or a plurality of shaft segments coupled together to form shaft 18.

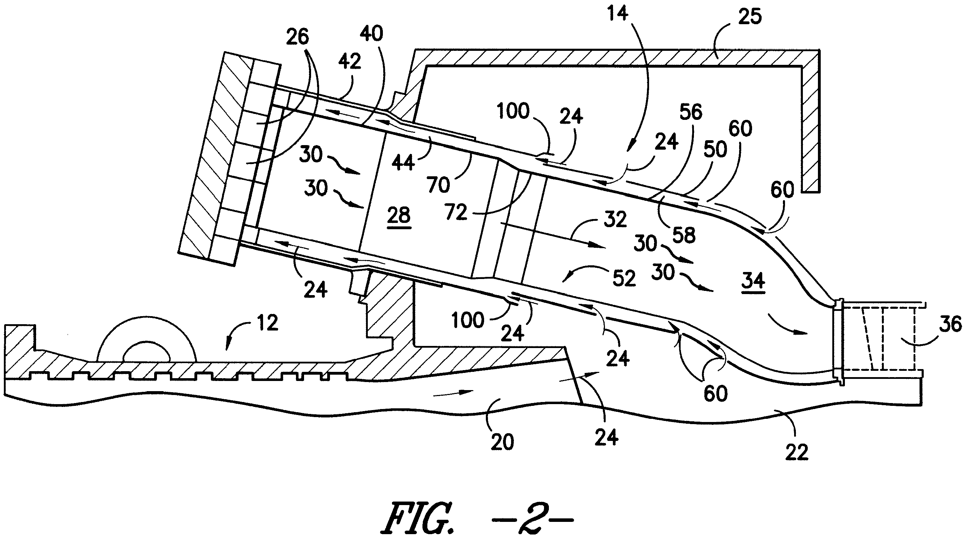

As illustrated in FIG. 2, the combustor 14 is generally fluidly coupled to the compressor 12 and the turbine 16. The compressor 12 may include a diffuser 20 and a discharge plenum 22 that are coupled to each other in fluid communication, so as to facilitate the channeling of a working fluid 24 to the combustor 14. As shown, at least a portion of the discharge plenum 22 is defined by an outer casing 25, such as a compressor discharge casing. After being compressed in the compressor 12, working fluid 24 may flow through the diffuser 20 and be provided to the discharge plenum 22. The working fluid 24 may then flow from the discharge plenum 22 to the combustor 14, wherein the working fluid 24 is combined with fuel from fuel nozzles 26. After mixing with the fuel, the working fluid 24 / fuel mixture may be ignited within combustion chamber 28 to create hot gas flow 30. The hot gas flow 30 may be channeled through the combustion chamber 28 along a hot gas path 32 into a transition piece cavity 34 and through a turbine nozzle 36 to the turbine 16.

The combustor 14 may comprise a hollow annular wall configured to facilitate working fluid 24. For example, the combustor 14 may include a combustor liner 40 disposed within a flow sleeve 42 such that the flow sleeve 42 at least partially surrounds the combustor liner 40. The arrangement of the combustor liner 40 and the flow sleeve 42, as shown in FIG. 2, is generally concentric and may define an annular passage or flow path 44 therebetween. In certain embodiments, the flow sleeve 42 and the combustor liner 40 may define a first or upstream hollow annular wall of the combustor 14. The interior of the combustor liner 40 may define the substantially cylindrical or annular combustion chamber 28 and at least partially define the hot gas path 32 through which hot gas flow 30 may be directed.

Downstream from the combustor liner 40 and the flow sleeve 42, an impingement sleeve 50 may be coupled to the flow sleeve 42. A transition piece 56 may be disposed within the impingement sleeve 50, such that the impingement sleeve 50 surrounds at least a portion of the transition piece 56. A concentric arrangement of the impingement sleeve 50 and the transition piece 56 may define an annular passage or flow path 58 therebetween. The impingement sleeve 50 may include a plurality of inlets 60, which may provide a flow path for at least a portion of the working fluid 24 from the compressor 12 through the discharge plenum 22 into the flow path 58. In other words, the impingement sleeve 50 may be perforated with a pattern of openings to define a perforated annular wall. Interior cavity 34 of the transition piece 56 may further define hot gas path 32 through which hot gas flow 30 from the combustion chamber 28 may be directed into the turbine 16.

As shown, the flow path 58 is fluidly coupled to the flow path 44. Thus, together, the flow paths 44 and 58 define a flow path configured to provide working fluid 24 from the compressor 12 and the discharge plenum 22 to the fuel nozzles 26, while also cooling the combustor 14.

As discussed above, the turbine system 10, in operation, may intake working fluid 24 and provide the working fluid 24 to the compressor 12. The compressor 12, which is driven by the shaft 18, may rotate and compress the working fluid 24. The compressed working fluid 24 may then be discharged into the diffuser 20. The majority of the compressed working fluid 24 may then be discharged from the compressor 12, by way of the diffuser 20, through the discharge plenum 22 and into the combustor 14. Additionally, a small portion (not shown) of the compressed working fluid 24 may be channeled downstream for cooling of other components of the turbine engine 10.

As shown, the outer casing 25 defining the discharge plenum 22 may at least partially surround the impingement sleeve 50 and the flow sleeve 42. A portion of the compressed working fluid 24 within the discharge plenum 22 may enter the flow path 58 by way of the inlets 60. The working fluid 24 in the flow path 58 may then be channeled upstream through flow path 44, such that the working fluid 24 is directed over the combustor liner 34. Thus, a flow path is defined in the upstream direction by flow path 58 (formed by impingement sleeve 50 and transition piece 56) and flow path 44 (formed by flow sleeve 42 and combustor liner 40). Accordingly, flow path 44 may receive working fluid 24 from flow path 58. The working fluid 24 flowing through the flow path 44 may then be channeled upstream towards the fuel nozzles 26, as discussed above.

As shown, the combustor liner 40 may include an upstream portion 70 and a downstream end 72. The downstream end 72 may generally be that end of the combustor liner 40 that is adjacent and, optionally, coupled to, the transition piece 56. The upstream portion 70 may generally by the remainder of the combustor liner 40 other than the downstream end 72. The upstream portion 70 and downstream end 72 may generally have any suitable shape and size. Further, any portion of the upstream portion 70 and/or the downstream end 72 may have a suitable taper, if desired.

The combustor liner 40 may, during operation of the system 10, require cooling. For example, hot gas flow 30 in the combustion chamber 28 may heat the combustor liner 40, and the combustor liner 40 must thus be cooled to prolong the life of the combustor liner 40, the combustor 14, and the system 10 in general. Specifically, the downstream end 72 of the combustor liner 40 may be a life-limiting portion of the combustor liner 40, and may thus require cooling. Further, in some embodiments, the working fluid 24 flowing through the flow path defined by flow paths 44 and 58 may, in some embodiments, not be adequate to cool the downstream end 72 or the combustor liner 40 in general.

Thus, the present disclosure is further directed to an injection sleeve 100 and a sleeve assembly 102. The injection sleeve 100 according to the present disclosure may provide working fluid 24 to the flow path defined by flow paths 44 and 58, thus enabling cooling of various components of the combustor 14, such as the transition piece 56, impingement sleeve 50, combustor liner 40, and flow sleeve 42. For example, in exemplary embodiments, the injection sleeve 100 may provide working fluid to the flow path adjacent the combustor liner 40, such that the working fluid 24 may cool the combustor liner 40. Specifically, in exemplary embodiments, the injection sleeve 100 may beneficially provide the working fluid 24 adjacent the downstream end 72 of the combustor liner 40, such that the working fluid 24 may cool the downstream end 72 of the combustor liner 40.

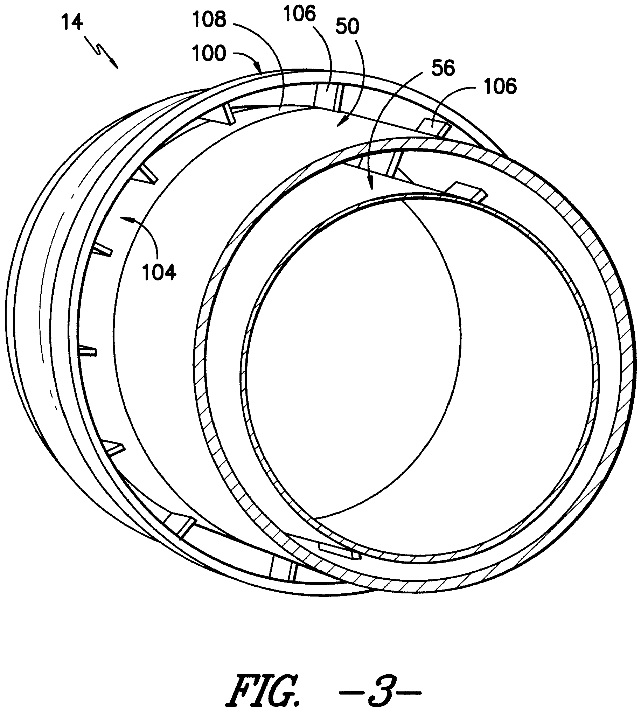

As shown in FIGS. 2 and 3, in some embodiments, an injection sleeve 100 according to the present disclosure may itself be utilized with an impingement sleeve 50 and transition piece 56 of a combustor 14. In other embodiments, as shown in FIGS. 4 through 6, the injection sleeve 100 may be incorporated into a sleeve assembly 102, which may be utilized with an impingement sleeve 50 and transition piece 56 of a combustor 14.

Thus, as shown in FIGS. 2 and 3, injection sleeve 100 may be positioned generally radially outward of the impingement sleeve 50. For example, the injection sleeve 100 may, in exemplary embodiments, at least partially surround the impingement sleeve 50. In other embodiments, the injection sleeve 100 may be positioned radially outward and upstream of the impingement sleeve 50 in the direction of flow of the working fluid 24 through the flow path.

Thus, the injection sleeve 100 may at least partially define a flow channel 104, or a plurality of flow channels 104, therethrough. The flow channels 104 may be configured to flow working fluid 24 to the flow path defined by flow paths 44 and 58. The flow channels 104 may, for example, further be defined by the impingement sleeve 50.

The injection sleeve 100 may be mounted to one of the transition piece 56 or the impingement sleeve 50. For example, a plurality of supports 106, such as struts, spacers, or other suitable support devices, may be utilized between the injection sleeve 100 and the transition piece 56 or the impingement sleeve 50 to mount the injection sleeve 100 thereon while allowing the injection sleeve 100 to at least partially define flow channels 104.

In exemplary embodiments, the injection sleeve 100 may be mounted to the impingement sleeve 50. Further, in some exemplary embodiments, the injection sleeve may be mounted to a forward sleeve portion 108 of the impingement sleeve 50. The forward sleeve portion 108 may be the generally upstream portion of the impingement sleeve 50 or an upstream extension of the impingement sleeve 50 that is mounted to the upstream end of the impingement sleeve 50.

As shown in FIGS. 4 through 6, in other embodiments, the injection sleeve 100 may be included in sleeve assembly 102. The sleeve assembly 102 may include an inner sleeve 112, an intermediate sleeve 114, and an injection sleeve 100.

The inner sleeve 112 may be configured for mounting to the transition piece 56. Thus, the inner sleeve 112 may have a size and shape generally similar to the size and shape of the upstream portion of the transition piece 56, such that the inner sleeve 112 may be mounted to the transition piece 56. The inner sleeve 112 may be mounted to the transition piece 56 using any suitable mounting devices or apparatus, including, for example, mechanical fasteners and/or welding. When mounted to the transition piece 56, the inner sleeve 112 may further define the hot gas path 32 and the flow path defined by flow paths 44 and 58.

The intermediate sleeve 114 may at least partially surround the inner sleeve 112. Further, the intermediate sleeve 114 may be mounted to the inner sleeve 112 through the use of suitable supports, as discussed with regard to mounting of the injection sleeve 100. The intermediate sleeve 114 may be configured for mounting to the impingement sleeve 50. Further, in exemplary embodiments, the impingement sleeve 50 may include forward sleeve portion 108, and the intermediate sleeve 114 may be configured for mounting to the forward sleeve portion 108. Thus, the intermediate sleeve 114 may have a size and shape generally similar to the size and shape of the upstream portion of the impingement sleeve 50 or the forward sleeve portion 106, such that the intermediate sleeve 114 may be mounted to the impingement sleeve 50. The intermediate sleeve 114 may be mounted to the impingement sleeve 50 using any suitable mounting devices or apparatus, including, for example, mechanical fasteners and/or welding. When mounted to the impingement sleeve 50, the intermediate sleeve 114 may further define the flow path defined by flow paths 44 and 58.

Injection sleeve 100 may be positioned generally radially outward of the intermediate sleeve 114. For example, the injection sleeve 100 may, in exemplary embodiments, at least partially surround the intermediate sleeve 114. In other embodiments, the injection sleeve 100 may be positioned radially outward and upstream of the intermediate sleeve 114 in the direction of flow of the working fluid 24 through the flow path when the sleeve assembly 102 is mounted in a combustor 14.

Thus, the injection sleeve 100 may at least partially define flow channel 104, or a plurality of flow channels 104, therethrough. The flow channels 104 may be configured to flow working fluid 24 therethrough, such as to the flow path defined by flow paths 44 and 58 when the sleeve assembly 102 is mounted in a combustor 14. The flow channels 104 may, for example, further be defined by the intermediate sleeve 114.

The injection sleeve 100 may be mounted to one of the inner sleeve 112 or the intermediate sleeve 114. For example, a plurality of supports 106, such as struts, spacers, or other suitable support devices, may be utilized between the injection sleeve 100 and the inner sleeve 112 or the intermediate sleeve 114 to mount the injection sleeve 100 thereon while allowing the injection sleeve 100 to at least partially define flow channels 104. In exemplary embodiments, the injection sleeve 100 may be mounted to the intermediate sleeve 114.

As shown in FIGS. 3 through 6, the injection sleeve 100 according to the present disclosure may define a flow channel 104 or a plurality of flow channels 104 therethrough. In exemplary embodiments, as shown in FIGS. 3 through 5, the flow channel 104 may be a generally annular flow channel 104. In these embodiments, the supports 106 mounting the injection sleeve 100 to the impingement sleeve 50 or the intermediate support 114 may be of a suitable size and shape, and in suitable positions, to minimize interference with the flow of working fluid 24 through the flow channel 104, such that the flow channel 104 acts as an annular plenum. Thus, working fluid 24 flowing through the flow channel 104 may be free to flow annularly within any portion of the annular flow channel 104 before being exhausted into the flow path.

In other embodiments, as shown in FIG. 6, the injection sleeve 100 may further define a plurality of flow channels 104, and the flow channels 104 may be disposed in a generally annular array. In these embodiments, the supports 106 mounting the injection sleeve 100 to the impingement sleeve 50 or the intermediate support 114 may be of a suitable size and shape, and in suitable positions, to generally isolate the flow channels 104 from each other, such working fluid 24 flowing through a flow channel 104 cannot flow into another flow channel 104 before being exhausted into the flow path.

As shown in FIG. 2, working fluid 24 flowed through a flow channel 104 may be exhausted from the flow channel 104 into the flow path defined by flow paths 44 and 58. This flow path may define an axial flow direction 120 (see FIGS. 5 and 6). Working fluid 24 exhausted into the flow path may flow generally upstream along the axial flow direction 120.

In some embodiments, as shown in FIG. 2, flow channel 104 may be configured such that working fluid 24 flowing through the flow channel 104 is exhausted from the flow channel 104 generally along the axial flow direction 120. In these embodiments, outlet 122 of flow channel 104 is positioned generally along the axial flow direction 120, such that working fluid 24 exhausted through the outlet 122 is flowing generally along the axial flow direction 120.

In other embodiments, as shown in FIGS. 5 and 6, flow channel 104 may be configured such that working fluid 24 flowing through the flow channel 104 is exhausted from the flow channel 104 generally at an angle 124 to the axial flow direction 120. Angle 124 may be defined for the flow with respect to a radial direction from the axial flow direction 120, such that flow at an angle 124 of 90° is flow in a generally radial direction and generally perpendicular to the axial flow direction 120. For example, in some embodiments, the angle 124 may be in the range between approximately 0° and approximately 45° from the axial flow direction. In these embodiments, outlet 122 of flow channel 104 is positioned with respect to the axial flow direction 120 such that working fluid 24 exhausted through the outlet 122 is flowing generally at angle 124 from the axial flow direction 120. It should be understood, however, that the present disclosure is not limited to flows at certain angles as discussed above, and rather that flows at any suitable angles are within the scope and spirit of the present disclosure.

Advantageously, exhausting of the working fluid 24 in the axial flow direction 120 or at a certain angle 124 from the axial flow direction may reduce the pressure drop that results from the working fluid 24 being flowed to the flow path. For example, an angle 124 may be determined for system 10 that provides optimal cooling of the various components of the combustor 14, such as of the combustor liner 40, while also minimizing the resultant pressure drop. Cooling and pressure drop may be balanced and correlated as desired or required using angle 124.

As discussed above, in exemplary embodiments, flow channel 104 may be configured to flow working fluid 24 to the flow path adjacent the combustor liner 40. For example, the outlet 122 of the flow channel 104 may be positioned such that working fluid 24 exhausted from the flow channel 104 through the outlet 122 is exhausted adjacent to the combustor liner 40. In exemplary embodiments, the working fluid 24 may be flowed to the flow path adjacent the downstream end 72 of the combustor liner 40, advantageously providing additional cooling of the downstream end 72 and preventing or reducing the likelihood of the downstream end failing. Alternatively, the working fluid 24 may be flowed to the flow path adjacent the upstream portion 70 of the combustor liner 40.

As shown in FIG. 2, in exemplary embodiments, the injection sleeve 100 may be configured for, and may further be, mounted to the flow sleeve 42. For example, upstream end 130 of the injection sleeve 100 may be sized and shaped for mounting to the flow sleeve 42. When the injection sleeve 100 is mounted in the combustor 14, the upstream end 130 may be mounted to the flow sleeve 42 using any suitable mounting devices or apparatus, including, for example, mechanical fasteners and/or welding. Mounting of the injection sleeve 100 to the flow sleeve 42 may prevent working fluid 24 flowing through flow channels 104 to the flow path from escaping from the flow channels 104 and flow path.

The present disclosure is further directed to a method for cooling a combustor liner 40. The method may include, for example, flowing a working fluid 24 through a flow channel 104, or a plurality of flow channels 104, at least partially defined by an injection sleeve 100 as discussed above. The method further includes exhausting the working fluid 24 from the flow channel 104 or flow channels 104 into a flow path adjacent the combustor liner 40, as discussed above.

Thus, the injection sleeve 100 and the method of the present disclosure may, in exemplary embodiments, allow pressure losses associate with cooling of the various components of the combustor 14 to be reduced and/or optimized. Further, the present injection sleeve 100 and the method may allow for cooling of the downstream end 72 of the combustor liner 40, which may be a life-limiting component of the combustor liner 40, the combustor 14, and/or the system 10 in general. Additionally, the present injection sleeve 100 and method may allow downstream portions of the flow sleeve 42 to be utilized for purposes other than cooling, such as, for example, for late lean injection of fuel to the system 10.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A combustor (14) comprising:
a transition piece (56);
an impingement sleeve (50) at least partially surrounding the transition piece (56) and at least partially defining a generally annular flow path (44, 58) therebetween; and,
an injection sleeve (100) mounted to one of the transition piece (56) or the impingement sleeve (50) and positioned radially outward of the impingement sleeve (50), the injection sleeve (100) at least partially defining a flow channel (104) configured to flow working fluid (24) to the flow path (44, 58).

2. The combustor (14) of claim 1, wherein the injection sleeve (100) is mounted to the impingement sleeve (50).

3. The combustor (14) of any of claims 1 to 2, wherein the impingement sleeve (50) comprises a forward sleeve portion (108), and wherein the injection sleeve (100) is mounted to the forward sleeve portion (108).

4. The combustor (14) of any of claims 1 to 3, wherein the flow path (44, 58) defines an axial flow direction (120), and wherein the flow channel (104) is configured such that working fluid (24) flowing through the flow channel (104) is exhausted from the flow channel (104) at an angle (124) in the range between approximately 0° and approximately 45° from the axial flow direction (120).

5. The combustor (14) of any of claims 1 to 4, wherein the flow channel (104) is a generally annular flow channel (104).

6. The combustor (14) of any of claims 1 to 4, wherein the injection sleeve (100) further defines a plurality of flow channels (104), the plurality of flow channels (104) disposed in a generally annular array.

7. The combustor (14) of any of claims 1 to 6, wherein the combustor (14) further comprises a combustor liner (40) and a flow sleeve (42) at least partially surrounding the combustor liner (40), the combustor liner (40) and flow sleeve (42) further defining the flow path (44, 58).

8. A sleeve assembly (102) for a combustor (14), the combustor (14) comprising a transition piece (56) and an impingement sleeve (50) at least partially surrounding the transition piece (56) and at least partially defining a generally annular flow path (44, 58) therebetween, the sleeve assembly (102) comprising:
an inner sleeve (112) configured for mounting to the transition piece (56);
an intermediate sleeve (114) at least partially surrounding the inner sleeve (112) and configured to partially define the flow path (44, 58) therebetween, the intermediate sleeve (114) configured for mounting to the impingement sleeve (50); and,
an injection sleeve (100) mounted to one of the inner sleeve (112) or the intermediate sleeve (114), the injection sleeve (100) at least partially defining a flow channel (104) configured to flow working fluid (24) therethrough.

9. The sleeve assembly (102) of claim 8, wherein the injection sleeve (100) is mounted to the intermediate sleeve (114).

10. The sleeve assembly (102) of any of claims 8 to 9, wherein the intermediate sleeve (114) is configured for mounting to a forward sleeve portion (108) of the impingement sleeve (50).

11. The sleeve assembly (102) of any of claims 8 to 10, wherein the flow path (44, 58) defines an axial flow direction (120), and wherein the flow channel (104) is configured such that working fluid flowing (24) through the flow channel (104) is exhausted from the flow channel (104) at an angle (124) in the range between approximately 0° and approximately 45° from the axial flow direction (120).

12. A method for cooling a combustor liner (40) in a combustor (14), the method comprising:
flowing a working fluid (24) through a flow channel (104) at least partially defined by an injection sleeve (100), the injection sleeve (100) mounted to one of a transition piece (56) or an impingement sleeve (50) and positioned radially outward of the impingement sleeve (50), the impingement sleeve (50) at least partially surrounding the transition piece (56) and at least partially defining a generally annular flow path (44, 58) therebetween;
exhausting the working fluid (24) from the flow channel (104) into the flow path (44, 58) adjacent the combustor liner (40).

13. The method of claim 12, wherein the flow path (44, 58) defines an axial flow direction (120), and wherein the working fluid (24) is exhausted from the flow channel (104) at an angle (124) in the range between 0° and 45° from the axial flow direction (120).

14. The method of any of claims 12 to 13, wherein the flow channel (104) is a generally annular flow channel.

15. The method of any of claims 12 to 13, wherein the injection sleeve (100) further defines a plurality of flow channels (104), the plurality of flow channels (104) disposed in a generally annular array.
